Europäisches Patentamt

(19) **European Patent Office**

**Office européen des brevets**

(11) Numéro de publication: **0 027 152**
**B1**

(12) **FASCICULE DE BREVET EUROPEEN**

(45) Date de publication du fascicule du brevet: **22.08.90**

(51) Int. Cl.⁵: **H 04 L 27/26**

(21) Numéro de dépôt: **79200584.5**

(22) Date de dépôt: **15.10.79**

(54) **Procédé et dispositif de transmission de signaux électriques périodiques à très faible tolérance d'erreur de fréquence.**

(43) Date de publication de la demande:
**22.04.81 Bulletin 81/16**

(45) Mention de la délivrance du brevet:
**22.08.90 Bulletin 90/34**

(84) Etats contractants désignés:
**AT BE CH DE FR GB IT LU NL SE**

(56) Documents cités:
**FR-A-1 244 379**
**FR-A-1 511 037**
**GB-A-2 009 541**
**US-A-3 573 621**
**US-A-3 577 082**
**US-A-3 716 790**

**IBM TECHNICAL DISCLOSURE BULLETIN, vol. 6, no. 12, mai 1964, New York US; E. HOPNER et al.: "Digital gain and frequency control", pages 38-39**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Cuvelier, Jean**
**15, Rue Cardinal Mercier**
**B-6100 Mont-sur-Marchienne (BE)**
Inventeur: **Guillaume, Jean**
**13, Rue du Mayeuri**
**B-6100 Mont-sur-Marchienne (BE)**

(74) Mandataire: **Bosch, Henry et al**
**Freylinger & Associés Boulevard de la Sauvenière, 85/042**
**B-4000 Liège (BE)**

Courier Press, Leamington Spa, England.

## Description

La présente invention a pour objet un procédé et dispositif de transmission de signaux électriques périodiques à très faible tolérance d'erreur de fréquence. L'invention est applicable par exemple à un équipement transmettant via un canal de communication téléphonique des signaux de téléimprimeurs susceptibles d'être décelés par des détecteurs à lames vibrantes. Lorsque de tels détecteurs à lames vibrantes possèdent une fréquence propre d'environ 1000 Hz, la tolérance d'erreur de fréquence admissible est sensiblement moins que 10 Hz. Pour assurer une transmission à une aussi faible tolérance d'erreur de fréquence, il existe plusieurs possibilités, par exemple, la transmission en modulation d'amplitude on en modulation de fréquence. Dans ces cas, la fréquence modulée sert de référence pour la démodulation à la réception. Dans d'autres cas, par exemple lors d'une transmission sur bande latérale unique ou lors d'une transmission par courants porteurs sur réseaux hertziens ou téléphoniques, il était nécessaire jusqu'à présent de transmettre une fréquence de rérérence de valeur connue simultanément avec une fréquence caractéristique afin de compenser toute erreur de fréquence qui aurait pu s'introduire pendant la transmission. Il est évident qu'un tel procédé de transmission nécessitant l'émission de deux fréquences est moins avantageux qu'un procédé de transmission qui ne nécessite que l'émission de la seule fréquence caractéristique.

Dans le brevet français FR—A—1244379, on décrit un procédé et dispositif de transmission, notamment en bande latérale unique, destiné à rendre négligeable des translations accidentelles en fréquence que peut subir un spectre de signaux radioélectriques. Suivant ce procédé connu, on émet des fréquences déterminées prises dans un spectre de fréquences significatives.

Parmi les fréquences significatives émises, on choisit une fréquence repère. A la réception, cette fréquence repère est utilisée pour la démodulation des signaux reçus. Dans le dispositif connu, le spectre des signaux reçus est démodulé en deux étapes successives, d'abord dans un premier mélangeur par rapport à une fréquence fixe engendrée dans un premier oscillateur et ensuite dans un deuxième mélangeur par rapport à une fréquence variable engendrée dans un deuxième oscillateur commandé en fonction de la fréquence repère reçue.

La présente invention concerne un procédé et dispositif de transmission semblable à celui visé par le brevet français FR—A—1244379, à savoir: un procédé de transmission dans lequel il n'est pas nécessaire de transmettre une fréquence en dehors de la gamme des fréquences déterminées et qui, même en présence de dérives et autres erreurs de fréquence telles qu'erreurs d'étalonnage d'oscillateurs locaux, permet d'émettre à chaque moment de transmission une seule fréquence choisie dans un groupe de fréquences déterminées et de restituer, à la réception, des fréquences utiles standardisées, par exemple celles décelables par les détecteurs à lames vibrantes d'un téléimprimeur.

Dans le brevet cité ci-dessus, on décrit un procédé de transmission, de signaux périodiques à très faible tolérance d'erreur de fréquence, notamment en bande latérale unique, dans lequel on émet des messages constitués de fréquences déterminées prises dans un spectre de fréquences significative, dans lequel on choisit une fréquence parmi les fréquences significatives comme fréquence repère, dans lequel, après réception, la fréquence repère est utilisée pour la démodulation des fréquences reçues et dans lequel les fréquences reçues démodulées en fréquences utiles servent à actionner des dispositifs à très faible tolérance d'erreur de fréquence. On y décrit également un dispositif récepteur pour ce procédé de transmission de signaux périodiques à très faible tolérance d'erreur de fréquence, notamment en bande latérale unique, comprenant des circuits de réception pour recevoir des messages constitués de fréquences déterminées prises dans un spectre de fréquences significatives parmi lesquelles une des fréquences est choisie comme fréquence repère et comprenant un démodulateur pour démoduler les fréquences reçues et actionner au moyen des fréquences reçues démodulées en fréquences utiles (fu) des dispositifs à très faible tolérance de fréquence.

L'invention a pour but de simplifier considérablement le récepteur connu en évitant la nécessité de deux générateurs de fréquence locaux et de deux démodulateurs. L'invention permet aussi d'utiliser pour la transmission des fréquences utiles une bande de fréquences décalées en un endroit choisi de la gamme des fréquences transmises, par exemple à une des extrémités de la bande allouée pour transmettre la parole dans un système de transmission de communications téléphoniques.

Le procédé de l'invention est caractérisé en ce qu'avant leur émission toutes les fréquences déterminées y compris la fréquence repère sont décalées par rapport à une sous-porteuse et que la fréquence repère, décalée d'une valeur fixe, est émise comme signal de début de message; en ce qu'à la réception, on mesure la fréquence repère décalée reçue et en ce qu'on commande la fréquence d'un oscillateur local du récepteur pour la faire coïncider avec une fréquence de référence égale à la fréquence repère décalée reçue mesurée, mais décalée à nouveau de la même dite valeur fixe, cette fois en sens opposé, cette fréquence de référence servant à la démodulation des signaux reçus dans un démodulateur.

Un dispositif récepteur suivant l'invention est caractérisé en ce que les signaux reçus dans toutes les fréquences déterminées ont été décalées avant leurs émissions, sont appliqués, d'une part, à une première entrée du démodulateur et, d'autre part, à l'entrée d'un filtre laissant passer uniquement la fréquence repère, décalée d'une valeur fixe, du signal de début de message, en ce que le signal de sortie du filtre est appliqué à un dispositif mesurant la fréquence de ce signal et engendrant un signal de référence dont la fréquence est égale à la fréquence repère déjà décalée, mesurée, mais décalée à nouveau, cette fois en sens opposé, de la même dite valeur fixe, et en ce que le signal de référence est appliqué à une deuxième entrée du démodulateur.

Il convient de remarquer que l'utilisation de signaux de début de message est en soi connue pour d'autres applications voir par exemple IBM Technical Disclosure Bulletin vol. 6, No. 12, May 1984, pages 38 et 39.

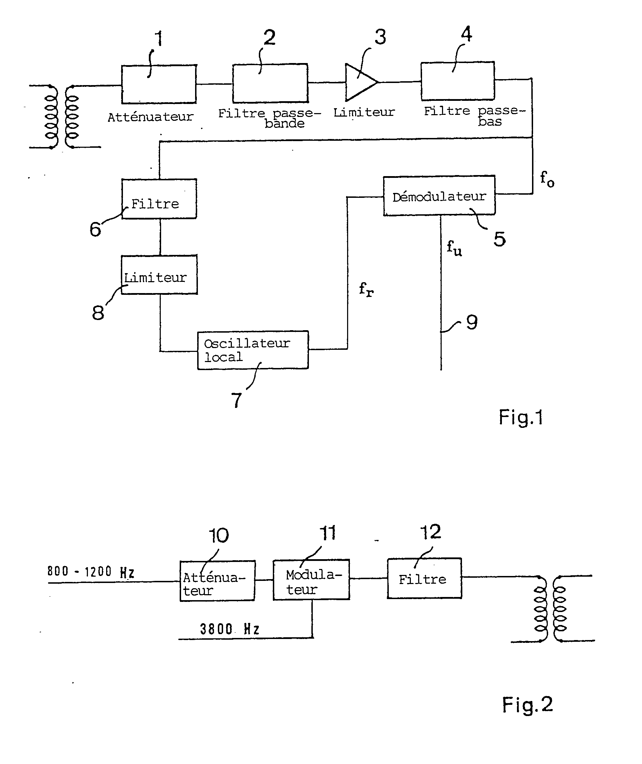

L'invention est décrite ci-dessous par rapport à un exemple d'une forme d'exécution et par rapport à un dessin représentant, figure 1, un schéma d'un dispositif récepteur et, figure 2, un schéma d'un dispositif émetteur pour téléimprimeurs.

Dans un dispositif émetteur, non représenté, des signaux périodiques à fréquences déterminées sont choisis par les touches d'un téléimprimeur et émis par l'antenne pendant des moments consécutifs. Contrairement à ce qui se passe dans les téléimprimeurs classiques, les signaux sélectionnés ne doivent pas nécessairement être des signaux à fréquences utiles auxquels sont sensibles les détecteurs à lames vibrantes des téléimprimeurs émetteur et récepteur. Par contre, selon la présente invention, les signaux émis par l'antenne, ci-après appelés signaux périodiques à fréquences déterminées, sont décalées par rapport aux fréquences utiles de valeurs égales à celles qu'on obtiendrait si on modulait une sous-porteuse de fréquence donnée par les fréquences utiles et si on ne retenait qu'une des bandes de cette sous-porteuse. Il va de soi que ce déclage peut être obtenu aussi par modulation effective d'une sous-porteuse au moyen de signaux à fréquences utiles sélectionnés.

En actionnant les touches du téléimprimeur émetteur, on n'émet donc pas les fréquences utiles, mais directement les signaux périodiques à fréquences déterminées décalées par rapport aux signaux à fréquences utiles.

De plus, on choisit un des signaux périodiques à fréquences déterminées, décalé d'une valeur fixe de la dite sous-porteuse pour servir de signal de début message. Cette valeur fixe est choisie de préférence telle que les signaux périodiques à fréquences déterminées occupent une bande de préférence située en un endroit choisi d'une gamme de fréquences transmissibles au moyen d'un canal de transmission déterminé, par exemple, dans le cas d'un système de transmission de communications téléphoniques, à une des extrémités de la gamme allouée à la transmission de la parole. Ainsi, si la gamme transmissible au moyen du canal de transmission s'étend de 300 à 3000 Hz et si les signaux de fréquences utiles qui actionnent les démodulateurs à lames vibrantes du téléimprimeur récepteur sont compris dans la bande de 800 à 1200 Hz, on choisit les signaux à fréquences déterminées à transmettre dans la bande de 2600 à 3000 Hz ce qui laisse encore la possibilité de transmettre simultanément la parole et d'allouer à cette transmission de la parole la bande de 300 Hz à 2.600 Hz. Pour émettre un message, on fait précéder celui-ci du signal de début de message choisi dans la gamme des signaux à fréquences déterminées, par exemple 3000 Hz. Ce signal de début de message peut aussi être un signal de repos.

Les signaux transmis sont reçus par le récepteur (figure 1) et traversent un atténuateur 1, un filtre de bande 2 et un limiteur 3 à la sortie duquel on récolte un signal rectangulaire. Ce signal rectangulaire est transformé dans un filtre passe-bas 4 en une oscillation sinusoïdale $f_o$ appliquée à une première entrée d'un démodulateur 5. Le démodulateur 5 est alimenté d'autre part, par un signal de référence fr appliqué à une deuxième entrée. Il délivre alors des signaux de fréquences utiles $f_u$ égaux à la différence $f_r - f_o$.

Ces signaux de fréquences utiles $f_u$ peuvent actionner les lames vibrantes d'un téléimprimeur récepteur, non représenté. Les oscillations sinusoïdales $f_o$ peuvent ne pas être exactement la reproduction des fréquences déterminées émis et ce à cause de différentes raison telle que la dérive de certains éléments de circuit. Toutefois, ces causes influencent de manière égale toutes les fréquences de la bande transmise. D'autre part, les dérives et autres causes ne varient que lentement dans le temps de sorte qu'une transmission continuelle d'une fréquence de référence n'est pas nécessaire.

Le signal de référence $f_r$ est égal à la sous-porteuse utilisée à l'emission si aucune erreur de fréquence n'affecte la transmission. Dans tous les autres cas, il en diffère un peu. En effet, il est obtenu grâce à la transmission du signal de début de message qui à l'émission mesure par exemple 3000 Hz. Lorsque, après transmission, il est reçu à la première entrée du démodulateur 5, il se peut qu'il soit affecté d'une erreur le fréquence de par exemple 15 Hz et qu'il ne mesure que 2985 Hz. Cette erreur de 15 Hz affecte toutes les fréquences dans la bande interressante entre 2600 et 3000 Hz. Pour compenser cette erreur, les signaux à la sortie du filtre passe-bas 4 sont dérivés vers un filtre passe haut 6 qui transmet vers sa sortie uniquement le signal de début de message c'est-à-dire les signaux de fréquence supérieurs à par exemple 2970 Hz, si l'erreur maximum prévisible est inférieure à 30 Hz.

Le signal à la sortie du filtre 6 est appliqué à un dispositif combiné de mesure et générateur d'oscillation 7 qui peut être précédé d'un limiteur ou générateur de signal rectangulaire 8, notamment lorsque le dispositif 7 est un calculateur ou microprocesseur qui mesure la fréquence du signal à la sortie du filtre 6 et engrendre une fréquence égale à cette fréquence mesurée plus une valeur fixe, par exemple 800 Hz. Si la fréquence du signal de début de message, mesurée par le dispositif 7 vaut 2985 Hz, la fréquence du signal de référence engendré par ce même dispositif 7 vaut 3785 Hz si on utilise la bande latérale inférieure de la sous-porteuse; elle est appliquée à la deuxième entrée du démodulateur 5. Ce démodulateur 5 reçoit d'une part, à la première entrée, les fréquences qui, à l'émission, occupaient la bande de 2600 à 3000 Hz et qui à la réception occupent la bande de 2585 à 2985 Hz et d'autre part, à la deuxième entrée, cette fréquence de référence 3785 Hz par rapport à laquelle la démodulation est effectuée. Suite à cette démodulation, les signaux à fréquences utiles décelables par les lames vibrantes d'un téléimprimeur de réception, on représenté, envoyés sur un conducteur 9 possèdent alors des fréquences dans la bande de 800 à 1200 Hz et ce, indépendamment d'une erreur initiale de fréquence dont pourraient être affectés les signaux reçus.

L'émission du signal de début de message peut se faire sous forme d'émission d'une fréquence de repos, mais il suffit d'émettre ce signal pendant par exemple quelques fractions d'une seconde au début de chaque message.

Chaque fois que le dispositif 7 enregistre l'arrivée d'un signal de début de message, la génération de l'ancienne fréquence de référence est interrompue et remplacée par la génération d'une nouvelle fréquence de référence en ajoutant à la fréquence mesurée du signal de début de message la valeur fixe, en l'occurrence 800 Hz.

L'invention est applicable soit dans le cas de téléimprimeurs classiques émettant des fréquences utiles dans la bande 800 à 1200 Hz soit dans le cas de téléimprimeurs émettant directement des fréquences décalées, par exemple entre 2600 et 3000 Hz. Lorsque, selon la figure 2, le téléimprimeur émet des signaux à fréquence utiles dans la bande de 800 à 1200 Hz, ces signaux passent par un atténuateur 10, et un modulateur 11 où ils modulent un signal sous-porteur de 3800 Hz. Les signaux quittant le modulateur 11 traversant ensuite un filtre 12 laissant passer la bande de 2600 à 3000 Hz avant d'être émis, par exemple, en modulant une porteuse à fréquence plus élevée.

**Revendications**

1. Procédé de transmission, de signaux électriques périodiques à très faible tolérance d'erreur de fréquence, notamment en bande latérale unique, dans lequel on émet des messages constitués de fréquences déterminées prises dans un spectre de fréquences significatives, dans lequel on choisit une fréquence parmi les fréquences significatives comme fréquence repère, dans lequel, aprés réception, la fréquence repère est utilisée pour la démodulation des fréquences reçues (fo) et dans lequel les fréquences reçues démodulées en fréquences utiles (fu) servent à actionner des dispositifs à très faible tolérance d'erreur de fréquence, caractérisé en ce qu'avant leur émission toutes les fréquences déterminées y compris la fréquence repère sont décalées par rapport à une sous-porteuse et que la fréquence repère, décalée d'une valeur fixe, est émise comme signal de début de message;

en ce qu'à la réception, on mesure la fréquence repère décalée reçue et en ce qu'on commande la fréquence d'un oscillateur local (7) du récepteur pour la faire coïncider avec une fréquence de référence (fr) égale à la fréquence repère décalée reçue mesurée, mais décalée à nouveau de la même dite valeur fixe, cette fois en sens opposé, cette fréquence de référence (fr) servant à la démodulation des signaux reçus (fo) dans un démodulateur (5).

2. Dispositif récepteur pour un procédé de transmission de signaux électriques périodiques à très faible tolérance d'erreur de fréquence, notamment en bande latérale unique, comprenant des circuits de réception (1 à 4) pour recevoir des messages constitués de fréquences déterminées prises dans un spectre de fréquences significatives parmi lesquelles une des fréquences est choisie comme fréquence repère et comprenant un démodulateur (5) pour démoduler les fréquences reçues (fo) at actionner au moyen des fréquences reçues démodulées en fréquences utiles (fu) des dispositifs à très faible tolérance de fréquence, caractérisé en ce que les signaux reçus (fo) dont toutes les fréquences déterminées ayant été décalées avant leurs emissions, sont appliquées, d'une part, à une première entrée du démodulateur (5) et, d'autre part, à l'entrée d'un filtre (6) laissant passer uniquement la fréquence repère, décalée d'une valeur fixé, du signal de début de message, en ce que le signal de sortie du filtre (6) est appliqué à un dispositif (7) mesurant la fréquence de ce signal et engendrant un signal de référence (fr) dont la fréquence est égale à la fréquence repère déjà décalée, mesurée, mais décalée à nouveau, cette fois en sens opposé, de la même dite valeur fixe et en ce que le signal de référence (fr) est appliqué à une deuxième entrée du démodulateur (5).

**Patentansprüche**

1. Verfahren zur Übertragung periodischer elektrischer Signale mit sehr geringer Frequenzfehlertoleranz, insbesondere im Einseitenband, bei dem Mitteilungen ausgesendet werden, die aus bestimmten Frequenzen innerhalb eines Spektrums von signifikanten Frequenzen bestehen, bei dem unter den signifikanten Frequenzen eine Frequenz als Markierungsfrequenz ausgewählt wird, bei dem, nach dem Empfang, die Markierungsfrequenz zur Demodulation der empfangenen Frequenzen ($f_o$) verwendet wird, und bei dem die empfangenen, zu Nutzfrequenzen ($f_u$) demodulierten Frequenzen zur Betätigung der Vorrichtungen mit sehr geringer Frequenzfehlertoleranz dienen, dadurch gekennzeichnet, daß alle bestimmten Frequenzen, einschließlich der Markierungsfrequenz, vor ihrer Aussendung bezüglich eines Unterträgers verschoben werden, und daß die um einen festen Wert verschobene Markierungsfrequenz als Anfangssignal der Mittelung ausgesendet wird;

daß beim Empfang die empfangene verschobene Markierungsfrequenz gemessen wird, und daß die Frequenz eines lokalen Oszillators (7) des Empfängers so gesteuert wird, daß sie mit einer Bezugsfrequenz (f$_r$) übereinstimmt, die der gemessenen empfangenen verschobenen, und erneut, jedoch in der engegengesetzten Richtung, um den gleichen, sogenannten festen Wert verschobenen Markierungsfrequenz entspricht, wobei diese Bezugsfrequenz (f$_r$) zur Demodulation der empfangenen Signale (f$_o$) in einem Demodulator (5) dient.

2. Empfangsvorrichtung für ein Verfahren zur Übertragung von periodischen elektrischen Signalen mit sehr geringer Frequenzfehlertoleranz, insbesondere im Einseitenband, aus Empfangsschaltungen (1 bis 4), um Mitteilungen zu empfangen, die aus bestimmten Frequenzen innerhalb eines Spektrums von signifikanten Frequenzen bestehen, unter denen eine Frequenz als Markierungs frequenz ausgewählt wird, und aus einem Demodulator (5), um die empfangenen Frequenzen (f$_o$) zu demodulieren und mittels der zu Nutzfrequenzen (f$_u$) demodulierten empfangenen Frequenzen Vorrichtungen mit sehr geringer Frequenztoleranz zu betätigen, dadurch gekennzeichnet, daß die empfangenen Signale (f$_o$), deren bestimmte Frequenzen von ihrer Aussendung erschoben wurden, einerseits auf einen ersten Eingang des Demodulators (5), und andererseits auf den Eingang eines Filters (6) gegeben werden, das nur die um einen festen Wert verschobene Markierungsfrequenz des Anfangssignals der Mitteilung hindurchläßt, daß das Ausgangssignal des Filter (6) auf eine Vorrichtung (7) gegeben wird, die die Frequenz dieses Signals mißt und ein Bezugssignal (f$_r$) erzeugt, dessen Frequenz der gemessenen, bereits verschobenen, und erneut, jedoch in der entgegengesetzten Richtung, um den gleichen, sogenannten festen Wert verschobenen Markierungsfrequenz entspricht, und daß das Bezugssignal (f$_r$) auf einen zweiten Eingang des Demodulators (5) gegeben wird.

## Claims

1. Method for transmitting periodic electrical signals with a very low frequency-error tolerance, in particular in single sideband mode, in which messages constituted from fixed frequencies taken from a spectrum of relevant frequencies are transmitted, in which one frequency from the relevant frequencies is chosen as a marker frequency, in which, after reception, the marker frequency is used for the demodulation of the received frequencies (fo) and in which the received frequencies, demodulated in terms of useful frequencies (fu), serve to actuate devices with a very low frequency-error tolerance, characterized in that, before their transmission, all the fixed frequencies, including the marker frequency, are shifted relative to a subcarrier and that the marker frequency, shifted by a constant value, is transmitted as a start of message signal;

in that on reception, the received, shifted marker frequency is measured and in that the frequency of a local oscillator (7) of the receiver is controlled in order to make this frequency coincide with a reference frequency (fr) equal to the measured, received, shifted marker frequency, but once more shifted by the same said constant value, this time in the opposite direction, this reference frequency (fr) serving for the demodulation of the received signals (fo) in a demodulator (5).

2. Receiver apparatus for a method for transmitting periodic electrical signals with a very low frequency-error tolerance, in particular in single side-band mode, comprising receiving circuits (1 to 4) to receive messages constituted from fixed frequencies taken from a spectrum of relevant frequencies from which one of the frequencies is chosen as a marker frequency and comprising a demodulator (5) to demodulate the received frequencies (fo) and to actuate by means of the received frequencies demodulated in terms of useful frequencies (fu) devices with a very low frequency-error tolerance, characterized in that the received signals (fo), for which all the fixed frequencies have been shifted before their transmissions, are applied, on the one hand to a first input of the demodulator (5), and on the other hand to the input of a filter (6) allowing only the marker frequency shifted by a constant value, of the start of message signal to pass, in that the output signal of the filter (6) is applied to a device (7) measuring the frequency of this signal and giving rise to a reference signal (fr) whose frequency is equal to the measured, already shifted marker frequency, but once more shifted, this time in the opposite direction, by the same said constant value, and in that the reference signal (fr) is applied to a second input of the demodulator (5).

Fig.1

Fig.2

1